# FASCICULE DE BREVET EUROPEEN

(11) **EP 3 715 858 B1**
(45) Date de publication et mention de la délivrance du brevet: **28.08.2024**
(21) Numéro de dépôt: 19165713.9
(22) Date de dépôt: 28.03.2019
(51) Int. Cl.: G01C 22/00, H04Q 9/00, G01P 3/487

(54) **PROCEDE ET SYSTEME DE MESURE D'AU MOINS UN PARAMETRE PHYSIQUE POUR UN VELO**
MESSVERFAHREN UND -SYSTEM MINDESTENS EINES PHYSIKALISCHEN PARAMETERS FÜR EIN FAHRRAD
METHOD AND SYSTEM FOR MEASURING AT LEAST ONE PHYSICAL PARAMETER FOR A BICYCLE

(43) Date de publication de la demande: 30.09.2020
(73) Titulaire: The Swatch Group Research and Development Ltd, 2074 Marin (CH)
(72) Inventeur: CASAGRANDE, Arnaud, 2014 Bôle (CH)
(74) Mandataire: ICB SA

(56) Documents cités:
- DE-A1- 102014 203 142
- DE-A1- 19 838 876
- DE-U1- 20 014 262
- DE-U1- 202012 011 461
- DE-U1- 29 615 910
- US-A- 3 723 966
- US-A1- 2005 156 590
- US-A1- 2010 180 664
- US-A1- 2011 018 526
- US-A1- 2017 115 319
- US-B2- 7 495 549
- US-B2- 9 424 739

## Description

### DOMAINE TECHNIQUE DE L'INVENTION

L'invention concerne un procédé de mesure d'une vitesse et/ou une distance parcourue par un vélo.

L'invention concerne aussi un système de mesure d'une vitesse et/ou une distance parcourue par un vélo pour la mise en oeuvre du procédé de mesure.

### ETAT DE LA TECHNIQUE

Pour effectuer une mesure d'un paramètre physique, tel qu'une vitesse d'un véhicule ayant par exemple deux roues, il peut être utilisé un tachymètre du type Bluetooth, qui est généralement muni d'une batterie pour son alimentation électrique. Il est aussi connu d'utiliser un dispositif de mesure de vitesse avec au moins un aimant permanent disposé sur une roue du véhicule et un capteur magnétique fixé par exemple sur une fourche du véhicule pour déterminer le passage de l'aimant en regard du capteur lors de la rotation de la roue du véhicule. Il est généralement nécessaire de munir un tel dispositif de mesure de vitesse d'une source d'énergie spécifique, ce qui complique la structure du dispositif à placer sur la roue du véhicule et la manière d'effectuer la mesure de vitesse.

Le brevet US 5,335,188 décrit un dispositif pour gérer et comparer des performances idéales, passées et présentes sur une machine d'exercice, telle qu'un vélo. Pour ce faire, il est prévu au moins un aimant permanent lié à la roue de vélo, et un capteur de mouvement sur la fourche de vélo pour transmettre des signaux de mesure par câble à une unité à microprocesseur disposée sur le guidon de vélo. Une batterie est prévue pour l'alimentation du dispositif. Le capteur de mouvement peut détecter le passage de l'aimant permanent lors de la rotation de la roue. Ce capteur de mouvement agit comme un capteur magnétique pour déterminer la vitesse de rotation de la roue au passage de l'aimant à proximité dudit capteur et en déduire la distance parcourue. Comme précédemment mentionné, il doit être utilisé une source d'énergie, telle qu'une batterie pour le fonctionnement du dispositif de mesure, ce qui complique la structure du dispositif à placer sur le vélo pour effectuer la mesure de vitesse.

La demande de brevet US 2015/0285657 A1 décrit un dispositif de gestion d'activité et d'enregistrement d'un vélo. Il est prévu au moins un aimant disposé sur les rayons d'une roue de vélo, une unité de contrôle montée sur une fourche de vélo, et un smartphone placé sur le guidon du vélo. L'unité de contrôle comprend notamment un capteur à effet Hall pour déterminer le passage de l'aimant lors de la rotation de la roue de vélo, un microprocesseur avec un logiciel propriétaire identique au logiciel du smartphone, une mémoire pour mémoriser toutes les mesures effectuées par le ou les capteurs. Le dispositif permet de mesurer la vitesse du vélo et la distance parcourue. Cependant une source d'énergie doit être prévue pour l'unité de contrôle, ce qui complique la structure du dispositif à placer sur le vélo pour effectuer la mesure de vitesse.

La demande de brevet US 2011/0018526 A1 décrit un dispositif de mesure pour mesurer la vitesse de rotation relative d'un rotor qui tourne par rapport à un stator au niveau d'une roue d'un véhicule. Un générateur d'impulsions inductives, qui est soutenu par le stator, comprend une bobine d'induction dans laquelle une tension électrique, qui représente un signal de mesure de la vitesse de rotation du rotor, est induite par la rotation du rotor. Un aimant permanent est prévu lors du passage de la bobine d'induction. Un dispositif émetteur, alimenté en énergie électrique par la tension induite par le générateur d'impulsions inductives, transmet sans fil au moins un signal de mesure de la vitesse de rotation à un dispositif récepteur. Aucun agencement précis d'un capteur magnétique et d'un aimant permanent monté sur un vélo pour la mesure d'une vitesse et d'une distance parcourue n'est décrit.

La demande de brevet US 2005/0156590 A1 décrit un dispositif de mesure pour mesurer le passage d'un aimant fixé sur un rayon d'une roue de vélo en regard d'un circuit de mesure à capteur magnétique fixé sur la fourche du vélo à une même distance de l'axe de rotation de la roue que l'aimant placé sur le rayon. Cependant il n'est pas défini précisément des calculs dans une unité de traitement cadencée par un oscillateur précis à faible consommation.

La demande de brevet DE 296 15 910 U1 décrit un équipement de sport. Il peut s'agir d'un tachymètre avec odomètre sur un vélo pour indiquer la distance parcourue et la vitesse instantanée. Cependant, il est principalement décrit une détection de vitesse pour des patins à roulettes, qui comprennent des aimants sur chaque roue et un capteur qui détecte leur passage afin de transmettre les données de mesure à un récepteur d'un dispositif d'affichage dans lequel il est calculé notamment la vitesse.

La demande de brevet DE 200 14 262 U1 décrit un capteur de vitesse de rotation et de température autonome en énergie, qui comprend un capteur de vitesse de rotation inductif, un capteur de température à semi-conducteur, un régulateur, un accumulateur d'énergie, un gestionnaire associé et un émetteur radio. Les impulsions de tension du capteur de vitesse de rotation sont rectifiées et amplifiées afin qu'un contrôleur puisse évaluer les impulsions pour mesurer la vitesse de rotation. Les impulsions de vitesse de rotation rectifiées sont stockées cumulativement dans un accumulateur d'énergie constituée de condensateurs. Rien ne concerne une mesure de vitesse ou distance parcourue par un vélo.

Le brevet US 9,424,739 B2 décrit un système sans fil auto alimenté. Un aimant interagit avec une inductance pour générer un signal de déclenchement et d'alimentation. Une transmission d'un signal de mesure peut être effectuée. Ce dispositif peut être monté sur un véhicule, mais rien n'est indiqué d'un tel agencement sur un vélo avec un aimant et avec circuit de mesure disposé sur le vélo au niveau d'une roue.

La demande de brevet DE 20 2012 011 461 U1 décrit un dispositif électronique de détection de vitesse et de kilométrage d'un vélo en utilisant au moins un aimant permanent disposé sur un rayon d'une roue et un circuit capteur, tel qu'un générateur de Hall disposé sur un cadre du vélo. Le circuit capteur détecte le passage de l'aimant permanent et prélève une tension d'alimentation pour le dispositif électronique. Un calcul de la distance parcourue et de la vitesse moyenne peut être effectué. Une unité de transmission de données est prévue pour la transmission de données à au moins un récepteur. Le circuit capteur n'est pas adapté pour déterminer facilement plusieurs grandeurs ou paramètres physiques par une simple alimentation électrique suite au passage de l'aimant permanent lors de la rotation de la roue du vélo.

La demande de brevet DE 198 38 876 A1 décrit un tachymètre électronique, qui est alimenté électriquement par le passage d'un aimant devant une bobine d'induction. La tension fournie par la bobine d'induction permet de charger un condensateur de stockage d'énergie par un circuit de redressement et de stabilisation de tension. La bobine d'induction peut détecter les variations de tensions induites au passage de plusieurs aimants permanents et en tant que capteur de rotation. Une vitesse d'une roue peut être déterminée, et une transmission de données peut être effectuée par liaison radio vers une unité d'évaluation. Rien n'est fait référence à un vélo.

La demande de brevet US 2010/0180664 A1 décrit un transducteur rotatif et un procédé de surveillance de l'usure du transducteur. Le transducteur rotatif possède un dispositif détecteur ayant un capteur de mesure pour générer un signal de mesure représentatif de la position angulaire et de la vitesse d'un objet connecté au transducteur rotatif. Un dispositif de surveillance est connecté au capteur de mesure pour transmettre des données et pour émettre un signal d'état d'usure du transducteur rotatif, sur la base du signal de mesure. Rien n'est fait référence à un vélo.

Le brevet US 7,495,549 B2 et la demande de brevet US 2017/0115319 A1 décrivent un dispositif de gestion d'une activité et d'enregistrement d'un vélo. Le dispositif permet de déterminer une pente et un dénivelé au moyen d'un accéléromètre combiné à un baromètre, mais rien en relation à un circuit de mesure muni d'un inclinomètre disposé au niveau d'une roue d'un vélo.

Le brevet US 3,723,966 A et la demande de brevet DE 10 2014 203142 A1 décrivent un dispositif de détermination de la pression d'un pneu d'une roue d'un véhicule, soit par un capteur de pression alimenté par batterie placé sur la jante de la roue ou par un capteur de pression disposé sur la roue et alimenté par une communication sans fil. Aucune liaison n'est définie avec un circuit de mesure mesurant une vitesse ou distance parcourue par le véhicule.

D'autres paramètres physiques peuvent être mesurés sur un vélo. Il peut s'agir de la mesure de la pression des pneus, de la détection du type de sol, de la température du sol, de l'accélération angulaire par un accéléromètre ou d'autres types de mesure. Dans le cas de la mesure de la pression des pneus, il peut être prévu un circuit capteur de pression placé sur la jante de la roue au niveau du trou de la valve. Ce circuit capteur de pression est alimenté par une batterie et a la possibilité de communiquer sans fil des signaux de mesures effectuées comme le produit Hutchinson Connec'Tires. Cependant il doit être prévu une batterie pour l'alimentation d'un tel circuit capteur, ce qui constitue un inconvénient.

### RESUMÉ DE L'INVENTION

L'invention a donc pour but de pallier les inconvénients cités ci-dessus pour simplifier la mesure d'au moins une vitesse et/ou une distance parcourue d'un vélo en fournissant avec un minimum d'énergie électrique l'information par exemple de la vitesse et/ou de la distance parcourue par transmission sans fil à un dispositif portable.

A cet effet, l'invention concerne un procédé de mesure d'au moins un paramètre physique d'un vélo, qui comprend les caractéristiques des revendications indépendantes 1 et 2.

Des étapes particulières du procédé de mesure sont définies dans les revendications dépendantes 3 à 14.

Un avantage du procédé de mesure selon l'invention réside dans le fait qu'au moins deux aimants permanents sont montés sur un cadre ou une fourche du vélo, et qu'au moins deux circuits de mesure à capteur magnétique sont disposés sur une roue, par exemple sur un rayon d'une roue de vélo ou sur la jante, pour que le capteur magnétique de chaque circuit de mesure puisse passer à proximité d'un des aimants lors de la rotation de la roue. Ainsi, une récupération d'énergie, lors du passage du capteur magnétique de chaque circuit de mesure devant un des aimants, est effectuée dans le circuit de mesure avec un redresseur et un condensateur de lissage. L'énergie récupérée permet d'alimenter les composants électroniques de chaque circuit de mesure.

A chaque détection du passage du capteur magnétique devant l'aimant, une mesure de la vitesse du vélo, peut être facilement effectuée dans une unité de calcul de chaque circuit de mesure, cadencée par un oscillateur à quartz horloger fonctionnant à basse tension. Une transmission directe par un signal radiofréquence, par exemple Bluetooth (BLE), de la mesure effectuée peut être faite depuis le circuit de mesure pour être reçue par un dispositif portable porté par l'utilisateur du véhicule ou disposé sur le guidon du véhicule. Ce dispositif portable peut être un téléphone portable ou une oreillette pour fournir un signal audio à l'utilisateur ou une tablette électronique placée sur le guidon afin d'afficher au moins la vitesse du vélo, et une distance parcourue par intégration de la mesure de vitesse.

Avantageusement, le circuit de mesure peut comprendre au moins deux capteurs magnétiques d'un circuit de mesure disposés par exemple chacun sur un rayon respectif de la roue avant du vélo et de préférence à 180° l'un de l'autre ou sur la jante de la roue. Cela permet de récupérer plus d'énergie déjà lors d'une rotation complète de la roue de vélo et permettre la mesure de vitesse et/ou de distance parcourue par le vélo. Une calibration du diamètre de la roue de vélo et de l'angle de fixation du circuit de mesure peut être effectuée initialement par une transmission depuis le dispositif portable vers le circuit de mesure. Une mémorisation de ces données dans le circuit de mesure permet lors de la mise en fonction du système de mesure de mesurer la vitesse du vélo au moins après un tour complet de la roue de vélo, et par la suite la distance parcourue.

Selon l'invention, il est prévu deux circuits de mesure à capteur magnétique qui peuvent être disposés respectivement de chaque côté sur la jante de la roue avant de vélo. Dans ce cas de figure, deux aimants permanents sont montés sur la fourche avant du vélo pour être disposés chacun en regard d'un capteur magnétique respectif des circuits de mesure à chaque passage des circuits de mesure lors de la rotation de la roue de vélo. Selon l'invention, les deux circuits de mesure sont montés sur un même côté de la roue ou de la jante, ou sur deux côtés opposés de la roue ou de la jante du vélo, et décalés de 180° l'un de l'autre. Des signaux de mesure peuvent être transmis par les deux circuits de mesure vers un dispositif portable.

Alternativement, l'ensemble des calculs et des calibrations peut être opéré et stocké dans le dispositif portable. Dans ce cas de figure, les circuits de mesure sont encore avantageusement simplifiés et ne transmettent que les impulsions de passage de roue dans le temps, et le total de ces impulsions, et éventuellement l'angle brut d'inclinaison du capteur. La calibration est prise en charge par le dispositif portable en roulant par exemple sur un parcours mesuré ou en entrant des valeurs d'inclinaison et de diamètre mesurées.

Au moyen des circuits de mesure, il est possible par la succession d'impulsions de tension induite dans le temps, fournie par chaque capteur magnétique, de calculer une vitesse instantanée, une vitesse maximale sur une période de temps déterminée et une vitesse moyenne dans l'unité de calcul. De plus par intégration dans l'unité de calcul, il peut facilement être déterminé la distance parcourue pendant une période de temps déterminée. Toutes les mesures peuvent être mémorisées pour pouvoir être transmises sur requête et en fonction du niveau de tension d'alimentation du circuit de mesure suite à la récupération d'énergie du passage du ou des capteurs magnétiques en regard du ou des aimants permanents.

D'autres paramètres peuvent être mesurés et transmis sans fil par le ou les circuits de mesure à un dispositif portable sur la base de l'énergie extraite au passage en regard du ou des aimants permanents.

Avantageusement, le circuit de mesure est monté sur le pneu ou sur la jante de la roue avant, voire de la roue arrière si l'aimant permanent est monté sur une portion arrière du cadre. L'antenne embarquée sur le pneu ou la jante devient tournante. Ceci permet, par synchronisation avec la position physique donnée par la position de l'aimant, également de fournir des informations mesurables au travers des propriétés de propagation du milieu RF. Il peut s'agir de la vitesse Doppler, de mesures de radar à synthèse d'ouverture SAR (Synthetic Aperture Radar en terminologie anglaise).

A cet effet, l'invention concerne également un système de mesure d'au moins un paramètre physique d'un vélo pour la mise en oeuvre du procédé de mesure, qui comprend les caractéristiques mentionnées dans la revendication indépendante 15.

Des formes d'exécution particulières du système de mesure sont définies dans les revendications dépendantes 16 à 20.

### BRÈVE DESCRIPTION DES FIGURES

Les buts, avantages et caractéristiques d'un procédé et système de mesure d'au moins un paramètre physique d'un vélo, apparaîtront mieux dans la description suivante sur la base d'au moins une forme d'exécution non limitative illustrée par les dessins sur lesquels :
- la figure 1 est une vue de côté d'un vélo muni du système de mesure d'au moins une vitesse et/ou d'une distance parcourue du vélo selon l'invention,
- la figure 2 est une vue de dessus d'un vélo muni d'une variante de réalisation du système de mesure d'au moins une vitesse et/ou d'une distance parcourue du vélo selon l'invention, et
- la figure 3 représente un schéma bloc simplifié des composants électroniques du système de mesure d'au moins une vitesse et/ou d'une distance parcourue d'un vélo selon l'invention.

### DESCRIPTION DETAILLEE DE L'INVENTION

Dans la description suivante, il est fait référence à un procédé et un système de mesure d'au moins une vitesse et/ou une distance parcourue par un vélo. Tous les composants électroniques, qui sont bien connus d'un homme du métier dans ce domaine technique, ne sont décrits que de manière simplifiée. Le vélo à deux roues peut être mis en mouvement par un utilisateur sur un chemin, par exemple sur un chemin routier ou en forêt.

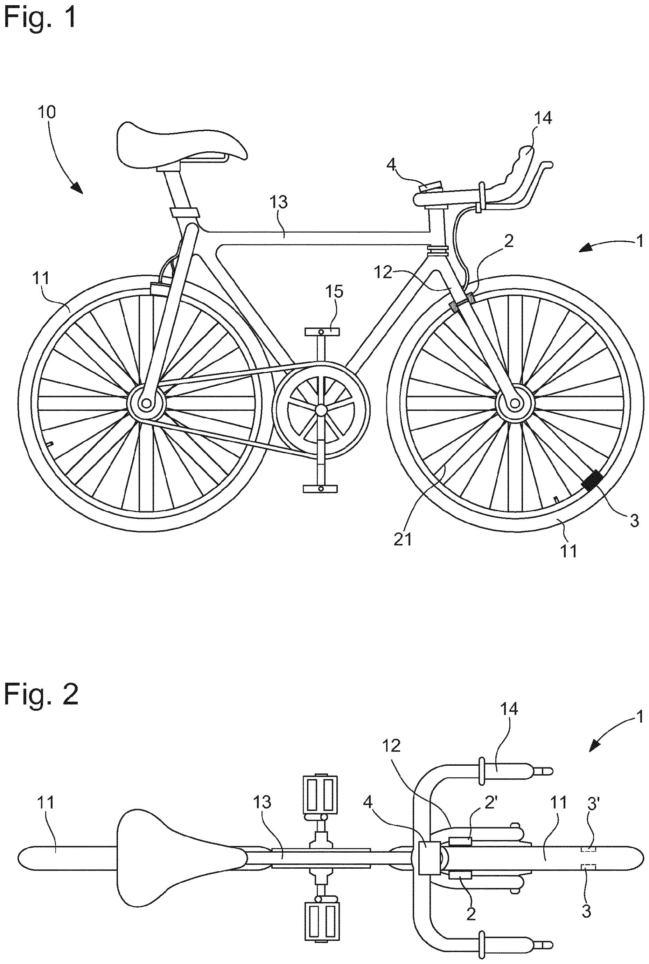

Les figures 1 et 2 représentent une vue de côté et de dessus d'un vélo 10 à deux roues 11. La roue avant 11 est montée libre de rotation à une extrémité d'une fourche avant 12. Cette fourche avant 12 est montée dans une portion avant du cadre 13 de vélo pour pouvoir tourner la roue avant 11 du vélo. La fourche 12 est reliée à une autre extrémité à un guidon 14. Un pédalier 15 actionnable par les deux pieds d'un utilisateur est prévu en liaison avec une chaîne pour entraîner la roue arrière 11 en rotation sur une portion arrière du cadre 13.

Un système de mesure 1 est également monté sur le vélo 10 pour la mesure d'au moins un paramètre physique, tel qu'une vitesse et/ou une distance parcourue du vélo en utilisation. Le système de mesure 1 comprend essentiellement au moins un aimant permanent 2 placé sur une portion arrière du cadre 13 ou sur une fourche avant 12, et au moins un circuit de mesure 3 placé sur une roue 11 avant ou arrière. De préférence, l'aimant permanent 2 est placé sur la fourche avant 12 et un circuit de mesure 3 est monté sur une jante ou pneu de la roue avant 11, voire sur un rayon 21 de la roue avant.

Le système de mesure 1 peut encore comprendre au moins un dispositif portable 4 pour recevoir par exemple des informations de mesure de vitesse et/ou de distance parcourue par le vélo depuis le circuit de mesure 3. De préférence, le circuit de mesure 3 est placé sur un côté de la jante de la roue avant 11. L'aimant permanent 2 est disposé sur la fourche avant 12 à une même distance de l'axe de rotation de la roue avant 11 que le circuit de mesure 3 pour être en regard du circuit de mesure 3 à son passage lors de la rotation de la roue avant 11.

De préférence, il est prévu au moins deux circuits de mesure 3, 3' placés sur la jante de la roue avant 11 chacun sur un côté opposé de la jante, et deux aimants permanents 2, 2' à une même distance de l'axe de rotation de la roue avant 11. Les aimants permanents 2, 2' sont en regard chacun d'un des circuits de mesure 3, 3' respectifs à leur passage devant les aimants permanents 2, 2'. Les circuits de mesure 3, 3' peuvent être montés à 180° l'un de l'autre sur deux côtés différents ou sur un même côté de la jante ou du pneu de la roue avant 11 avec un seul aimant permanent 2 utile dans ce cas. Il peut aussi être envisagé de placer les circuits de mesure 3, 3' chacun sur un rayon 21 de la roue avant 11.

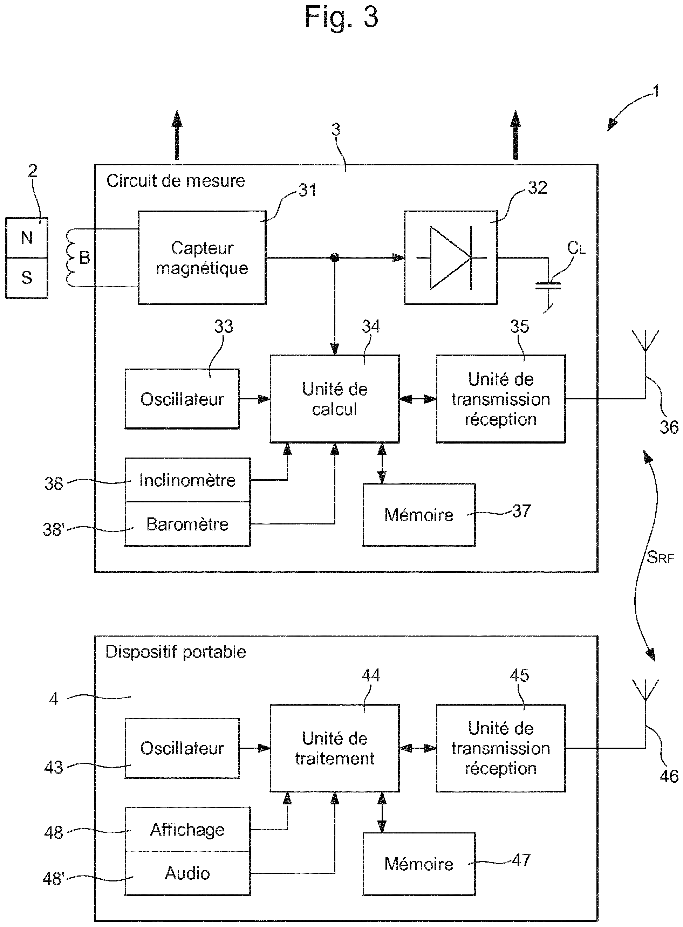

Dans le cas d'un seul circuit de mesure 3 utilisé comme montré en figure 3, ce circuit de mesure 3 comprend principalement un capteur magnétique 31 pour capter son passage devant un aimant permanent 2 notamment par une bobine B, un redresseur à au moins une diode 32 pour redresser la tension induite captée par la bobine B du capteur magnétique 31, et un condensateur de lissage C_{L} pour stocker l'énergie récupérée à la suite du redresseur 32. L'énergie récupérée et stockée sur le condensateur de lissage C_{L} permet de fournir une alimentation électrique aux composants électroniques du circuit de mesure 3.

Le circuit de mesure 3 comprend encore essentiellement une unité de calcul 34 liée directement en sortie du capteur magnétique 31 pour effectuer le calcul de la vitesse et/ou la distance parcourue du vélo en utilisation. L'unité de calcul 34, qui peut être un processeur, est cadencée par un oscillateur 33, qui est un oscillateur à quartz horloger . Chaque impulsion magnétique à son passage devant l'aimant permanent 2 à proximité du capteur magnétique 31, et selon une cadence, dans le temps, générée par l'oscillateur 33, permet à l'unité de calcul 34 de calculer facilement la vitesse. De plus, il est possible d'obtenir aussi facilement la distance parcourue par intégration.

Il peut être envisagé de calculer dans l'unité de calcul 34 une vitesse instantanée, une vitesse maximale sur une période de temps déterminée et une vitesse moyenne. Une distance parcourue par le vélo peut aussi être déterminée dans l'unité de calcul 34 sur une période de temps déterminée.

Les mesures effectuées peuvent être transmises par une antenne 36 d'une unité de transmission-réception 35 reliée en sortie de l'unité de calcul 34, à un dispositif portable 4. L'unité de transmission-réception 35 peut être du type BLE en mode annonce ou publicitaire (« advertising » en terminologie anglaise) pour transmettre des signaux radiofréquences S_{RF} à faible distance au dispositif portable 4. Ce dispositif portable 4 peut être un téléphone portable monté sur le guidon du vélo, ou une tablette électronique, voire aussi une oreillette électronique pour signaler les mesures sous forme audio à l'utilisateur.

Dans une variante de réalisation, l'unité de calcul 34 du circuit de mesure 3 peut être prévue pour déterminer des temps de son passage devant l'aimant permanent 2 fixe en regard du capteur magnétique 31 sur la base des impulsions de tension induite fournies par le capteur magnétique 31. Ensuite, l'unité de transmission-réception 35 du circuit de mesure 3 transmet par l'antenne 36 des données relatives aux temps du passage du capteur magnétique 31 devant l'aimant permanent 2 au dispositif portable 4. Un calcul d'une vitesse et/ou d'une distance parcourue du vélo est effectué directement dans une unité de traitement 44 du dispositif portable 4.

Cette vitesse v du vélo est donc obtenue en connaissant le temps t entre deux pointes de tension induite s'il n'y a qu'un seul capteur magnétique et un seul aimant permanent 2 et la dimension de la roue de vélo avec un diamètre D. Cela donne v = π·D/t. Avec deux circuits de mesure 3, 3' par exemple disposés sur la jante à 180° l'un de l'autre, la vitesse peut être donc v = π · D/(2 t).

Bien entendu, pour le calcul exact de la vitesse du vélo, le diamètre D de la roue avant 11 et éventuellement l'angle d'inclinaison du circuit de mesure 3 avec le capteur magnétique 31 par rapport à l'horizontale doivent être intrinsèquement calibrés par l'utilisateur du vélo notamment par l'intermédiaire du dispositif portable 4 expliqué ci-après.

Comme représenté à la figure 3, il est à noter que le circuit de mesure 3 peut comprendre une mémoire 37 reliée à l'unité de calcul 34 pour mémoriser les mesures de vitesse et de distance parcourue dans le temps. Il peut s'agir d'une mémoire non volatile du type FLASH pour garder en mémoire les données en cas de coupure d'alimentation, notamment quand le vélo est à l'arrêt ou que la tension stockée sur le condensateur de lissage C_{L} n'est plus suffisante.

Le système de mesure 1 peut encore comprendre un circuit à capteur de pression non représenté disposé au niveau d'une valve du pneu sur la jante de roue pour mesurer la pression du pneu. L'alimentation électrique peut être fournie par le circuit de mesure 3 par une communication sans fil et la mesure de pression du circuit à capteur de pression est transmise au circuit de mesure 3. Cette mesure de pression peut être mémorisée dans le circuit de mesure 3 ou également transmise au dispositif portable 4.

Une détection du type de sol peut être déterminée par le système de mesure 1. Il peut être prévu un capteur de température du circuit de mesure 3 pour mesurer la température du sol, un accéléromètre pour mesurer l'accélération angulaire.

Grâce au circuit de mesure 3 monté sur le pneu ou sur la jante de la roue avant du vélo, voire de la roue arrière du vélo, il peut être effectué une synchronisation avec la position physique donnée par la position de l'aimant 2. Ainsi cela permet de fournir aussi des informations mesurables au travers des propriétés de propagation du milieu RF. Il peut s'agir de la vitesse Doppler, de mesures de radar à synthèse d'ouverture SAR (Synthetic Aperture Radar en terminologie anglaise).

Quand le vélo s'arrête ou roule à trop faible vitesse, il est prévu de désactiver l'unité de transmission-réception 35 si la tension d'alimentation depuis le condensateur de lissage C_{L} descend en dessous d'un premier seuil de tension. Lorsque cette tension d'alimentation descend encore plus bas au-dessous d'un second seuil critique de tension, tout le circuit de mesure 3 est désactivé en ayant mémorisé au préalable toutes les données de mesure dans la mémoire non volatile 37. Ainsi, ces données mémorisées peuvent être à nouveau disponibles pour être transmises au dispositif portable 4 lorsque la tension d'alimentation est suffisante au-dessus du premier seuil bas de tension avec le vélo en utilisation.

Bien entendu pour avoir une tension suffisante de fonctionnement de tout le circuit de mesure 3 même avec une faible vitesse, cela dépend du dimensionnement de la bobine B du capteur magnétique 31 avec un nombre de spires déterminé et de la force du champ magnétique généré par le ou les aimants permanents 2. La distance entre le ou les aimants permanents 2 au passage du capteur magnétique 31 doit être la plus faible possible. Avec un circuit de mesure 3 et un aimant permanent 2, il peut suffire d'une vitesse du vélo juste supérieure par exemple à 2 km/h pour un stockage d'énergie adéquat sur le condensateur de lissage C_{L}.

Le dispositif portable 4 peut être comme expliqué ci-dessus, un téléphone portable porté par l'utilisateur du vélo ou fixé sur une portion du vélo par exemple sur le guidon du vélo. Il peut s'agir aussi d'une tablette électronique aussi fixée sur le guidon du vélo, ou une oreillette électronique portée à l'oreille par l'utilisateur pour signaler les mesures de vitesse et de distance parcourue par un signal audio.

Le dispositif portable 4 comprend une unité de transmission-réception 45 pour établir une communication de signaux S_{RF} par une antenne 46 avec le circuit de mesure 3. Le dispositif portable 4 comprend encore un oscillateur 43, qui peut aussi être un oscillateur à quartz horloger ou autre, pour cadencer une unité de traitement de données 44 reliée à l'unité de transmission-réception 45. Une mémoire non volatile 47 permet de mémoriser les informations de mesures reçues du circuit de mesure ou calculées dans le dispositif portable 4, et de fournir des données de paramétrage ou de calibration à l'unité de traitement pour une transmission au circuit de mesure 3 par l'unité de transmission-réception 45. Il peut encore être prévu au moins un élément d'affichage 48 par exemple à cristaux liquides ou LED pour signaler à l'utilisateur la vitesse du vélo et la distance parcourue lors de la réception des signaux S_{RF} du circuit de mesure 3.

Dans le cas d'un dispositif portable 4 sous la forme d'une oreillette électronique, un élément audio 48' tel qu'un haut-parleur peut être prévu. Il peut donc y avoir aussi bien l'élément audio 48' et l'élément d'affichage 48 pour le dispositif portable 4 sous la forme du téléphone portable ou de la tablette électronique. Ainsi une information de mesures effectuées par le circuit de mesure 3 peut être fournie à l'utilisateur sous forme audio à l'aide d'une synthèse vocale.

Il est encore à noter que comme la distance entre le dispositif portable 4 fixé sur le guidon et le circuit de mesure 3 est faible, il est possible de diminuer fortement la puissance du signal S_{RF} BLE. Cela permet ainsi d'augmenter la durée de fonctionnement du circuit de mesure 3 lorsque le vélo est un moment à l'arrêt.

Le capteur magnétique 31 du circuit de mesure peut n'être constitué de manière simplifiée que par la bobine à plusieurs spires reliées à l'unité de calcul 34. De plus, il peut être prévu deux circuits de mesure 3, 3' montrés en figure 2 positionnés par exemple à une même position sur la roue, mais sur deux côtés différents de la jante ou du pneu de la roue 11. Ces deux circuits de mesure 3, 3' peuvent aussi être disposés à 180° l'un de l'autre d'un même côté ou sur deux côtés différents de la jante ou du pneu de la roue 11. Cela permet d'assurer le bon fonctionnement d'au moins un des deux circuits de mesure 3, 3' à capteur magnétiques pour la mesure précise de la vitesse et de la distance parcourue dans le circuit de mesure 3 ou une autre grandeur physique. Le capteur magnétique 31 peut aussi être un capteur à effet Hall.

A partir de la description qui vient d'être faite, plusieurs variantes de réalisation d'un procédé et système de mesure d'au moins une vitesse et/ou une distance parcourue par un vélo à au moins une roue, peuvent être conçues par l'homme du métier sans sortir du cadre de l'invention définie par les revendications. Plusieurs dispositifs portables peuvent être prévus dans le système de mesure. Chaque dispositif portable possède sa propre source d'énergie, telle qu'une batterie ou une cellule solaire ou autre source d'énergie. Le ou les circuits de mesure et le ou les aimants permanents peuvent aussi être montés du côté de la roue arrière du vélo. Il peut aussi être prévu que les aimants soient intégrés dans la matière du cadre ou de la fourche avant.

## Revendications

1. Procédé de mesure d'au moins une vitesse et/ou une distance parcourue par un vélo (10) lors de son utilisation par un utilisateur, au moyen d'au moins deux circuits de mesure (3, 3'), chaque circuit de mesure comprenant un capteur magnétique (31), les deux circuits de mesure étant disposés sur un même côté de la roue ou de la jante ou sur deux côtés opposés de la roue (11) ou de la jante du vélo et décalés de 180° l'un de l'autre, et d'au moins deux aimants permanents (2, 2') disposés sur une portion de cadre (13) ou une fourche (12) de montage de la roue libre de rotation, chaque aimant permanent (2, 2') étant disposé sur la portion de cadre (13) ou la fourche (12) à une même distance de l'axe de rotation de la roue (11) que chaque circuit de mesure (3, 3') pour être en regard du circuit de mesure (3, 3') respectif à son passage lors de la rotation de la roue (11),
le procédé comprenant des étapes de :
- mettre le vélo (10) en mouvement sur un chemin avec la roue (11) en rotation avec les circuits de mesure (3, 3'),
- détecter le passage du capteur magnétique (31) de chaque circuit de mesure (3, 3') en regard de l'aimant permanent (2, 2') respectif en générant une impulsion de tension induite à chaque passage de chaque circuit de mesure (3, 3') en rotation,
- redresser la tension générée par le capteur magnétique (31) au moyen d'un redresseur (32) et en stockant la tension redressée sur un condensateur de lissage (C_{L}) pour alimenter le circuit de mesure (3, 3') respectif,
- calculer une vitesse et/ou une distance parcourue du vélo (10) dans une unité de calcul (34), qui est cadencée par un oscillateur (33) à quartz horloger du circuit de mesure, sur la base des impulsions de tension induite reçues dans le temps du capteur magnétique (31) en connaissant la valeur du diamètre de la roue (11) du vélo (10), et
- effectuer une mémorisation de mesures de vitesse et/ou de distance parcoure obtenues par intégration dans l'unité de calcul (34) de chaque circuit de mesure (3, 3') dans une mémoire non volatile (37) de chaque circuit de mesure (3, 3'), et
- transmettre sans fil une ou plusieurs mesures de la vitesse et/ou la distance calculées dans l'unité de calcul (34) de chaque circuit de mesure (3, 3') à un dispositif portable (4) porté par l'utilisateur ou sur une partie du vélo (10) par une unité de transmission-réception de signaux (35) liée à une antenne (36) de chaque circuit de mesure (3, 3').

2. Procédé de mesure d'au moins une vitesse et/ou une distance parcourue par un vélo (10) lors de son utilisation par un utilisateur, au moyen d'au moins deux circuits de mesure (3, 3'), chaque circuit de mesure comprenant un capteur magnétique (31) disposés sur un même côté de la roue ou de la jante ou sur deux côtés opposés de la roue (11) ou de la jante du vélo, et étant décalés l'un de l'autre de 180°, et d'au moins deux aimants permanents (2, 2') disposés sur une portion de cadre (13) ou une fourche (12) de montage de la roue libre de rotation, chaque aimant permanent (2, 2') étant disposé sur la portion de cadre (13) ou la fourche (12) à une même distance de l'axe de rotation de la roue (11) que chaque circuit de mesure (3, 3') pour être en regard du circuit de mesure (3, 3') respectif à son passage lors de la rotation de la roue (11),
le procédé comprenant des étapes de :
- mettre le vélo (10) en mouvement sur un chemin avec la roue (11) en rotation avec les circuits de mesure (3, 3'),
- détecter le passage du capteur magnétique (31) de chaque circuit de mesure (3, 3') en regard de l'aimant permanent (2, 2') respectif en générant une impulsion de tension induite à chaque passage de chaque circuit de mesure (3, 3') en rotation,
- redresser la tension générée par le capteur magnétique (31) au moyen d'un redresseur (32) et en stockant la tension redressée sur un condensateur de lissage (C_{L}) pour alimenter le circuit de mesure (3, 3') respectif,
- déterminer des temps de passage de chaque circuit de mesure (3, 3') à capteur magnétique (31) en regard de l'aimant permanent (2, 2') respectif dans une unité de calcul (34), qui est cadencée par un oscillateur (33) à quartz horloger du circuit de mesure (3, 3'), sur la base d'impulsions de tension induite fournies par le capteur magnétique (31), et
- transmettre sans fil des données relatives aux temps de passage de chaque capteur magnétique (31) en regard de l'aimant permanent (2, 2') respectif à un dispositif portable (4) porté par l'utilisateur ou sur une partie du vélo (10) par une unité de transmission-réception de signaux (35) liée à une antenne (36) de chaque circuit de mesure (3, 3') de manière à calculer dans une unité de traitement (44) du dispositif portable (4) une vitesse et/ou une distance parcourue du vélo (10), et
- effectuer une mémorisation de mesures de vitesse et/ou de distance parcoure obtenues par intégration dans l'unité de traitement (44) du dispositif portable (4) dans une mémoire non volatile (47) du dispositif portable (4).

3. Procédé de mesure selon l'une des revendications 1 et 2, **caractérisé en ce qu'**une distance parcourue par le vélo (10) sur une période de temps déterminée est calculée par intégration dans l'unité de calcul (34) du circuit de mesure (3) ou dans l'unité de traitement (44) du dispositif portable (4), sur la base des impulsions de tension induite reçues dans le temps du capteur magnétique (31), et **en ce que** le dispositif portable (4) est agencé pour afficher une mesure de vitesse instantanée ou des mesures de vitesse et/ou de distance parcourue sur un élément d'affichage (48) du dispositif portable (4), ou pour signaler ces mesures à l'utilisateur par un signal audio par un élément audio (48') du dispositif portable (4).

4. Procédé de mesure selon la revendication 3, **caractérisé en ce qu'**une ou plusieurs mesures de distance parcourue sont transmises sans fil au dispositif portable (4) en même temps que la ou les mesures de vitesse ou indépendamment.

5. Procédé de mesure selon la revendication 1, **caractérisé en ce que** dès qu'une mesure de la vitesse est déterminée dans l'unité de calcul (34), une transmission directe de cette mesure est effectuée à destination du dispositif portable (4) pour afficher cette mesure de vitesse instantanée sur un élément d'affichage (48) du dispositif portable (4), ou pour signaler cette mesure à l'utilisateur par un signal audio par un élément audio (48') du dispositif portable (4).

6. Procédé de mesure selon la revendication 1, **caractérisé en ce qu'**une valeur maximale de vitesse ou une valeur moyenne de vitesse est déterminée dans l'unité de calcul (34) sur une période de temps déterminée et transmise à destination du dispositif portable (4) pour afficher cette valeur maximale ou moyenne de vitesse sur un élément d'affichage (48) du dispositif portable (4), ou pour signaler cette mesure à l'utilisateur par un signal audio par un élément audio (48') du dispositif portable (4).

7. Procédé de mesure selon la revendication 2, **caractérisé en ce qu'**une valeur maximale de vitesse ou une valeur moyenne de vitesse est déterminée dans l'unité de traitement (44) du dispositif portable (4) sur une période de temps déterminée pour afficher cette valeur maximale ou moyenne de vitesse sur un élément d'affichage (48) du dispositif portable (4), ou pour signaler cette mesure à l'utilisateur par un signal audio par un élément audio (48') du dispositif portable (4).

8. Procédé de mesure selon la revendication 1, **caractérisé en ce que** dès que le niveau de tension d'alimentation sur le condensateur de lissage (C_{L}) passe en dessous d'un premier seuil bas de tension d'alimentation, une désactivation de l'unité de transmission-réception de signaux (35) est effectuée.

9. Procédé de mesure selon la revendication 8, **caractérisé en ce qu'**avant que le niveau de tension d'alimentation sur le condensateur de lissage (C_{L}) passe en dessous d'un second seuil de tension d'alimentation inférieur au premier seuil bas, une mémorisation de différents calculs de vitesse et/ou de distance parcourue par le vélo (10) est effectuée dans une mémoire non volatile (37) du circuit de mesure (3).

10. Procédé de mesure selon l'une des revendications 1 et 2, **caractérisé en ce qu'**une mesure de la température du sol est effectuée par un capteur de température de chaque circuit de mesure (3, 3'), et **en ce qu'**une transmission de la mesure de température au dispositif portable (4) est effectuée.

11. Procédé de mesure selon l'une des revendications 1 et 2, **caractérisé en ce qu'**une mesure d'accélération angulaire est effectuée par un accéléromètre de chaque circuit de mesure (3, 3'), et **en ce qu'**une transmission de la mesure d'accélération angulaire au dispositif portable (4) est effectuée.

12. Procédé de mesure selon la revendication 1, **caractérisé en ce qu'**une opération de calibration du diamètre de la roue (11) du vélo (10) et de l'angle de fixation du circuit de mesure (3) est effectuée initialement par une transmission de signaux de paramétrage (S_{RF}) depuis le dispositif portable (4) vers chaque circuit de mesure (3, 3').

13. Procédé de mesure selon la revendication 2, **caractérisé en ce qu'**une opération de calibration du diamètre de la roue (11) du vélo (10) et de l'angle de fixation de chaque circuit de mesure (3, 3') est effectuée par le dispositif portable (4) sur la base de données brutes transmises par chaque circuit de mesure (3, 3') et de valeurs mesurées en absolu ou sur un parcours calibré.

14. Procédé de mesure selon l'une des revendications 1 et 2, **caractérisé en ce que** chaque circuit de mesure (3, 3') communique par des signaux radiofréquences (S_{RF}) de l'unité de transmission-réception (35) du type BLE en mode publicitaire avec le dispositif portable (4).

15. Système (1) de mesure d'une vitesse et/ou d'une distance parcourue par un vélo (10), convenant à la mise en oeuvre du procédé de mesure selon l'une des revendications précédentes, le système de mesure comprenant :
- un vélo,
- un dispositif portable (4),
- au moins deux circuits de mesure (3, 3'), chaque circuit de mesure comprenant un capteur magnétique (31), les deux circuits de mesure étant disposés sur un même côté de la roue ou de la jante ou sur deux côtés opposés de la roue (11) ou de la jante du vélo, et étant décalés de 180° l'un de l'autre,
- au moins deux aimants permanents (2, 2') disposés sur une portion de cadre (13) ou une fourche (12) de montage de la roue libre de rotation du vélo, chaque aimant permanent (2, 2') étant disposé sur la portion de cadre (13) ou la fourche (12) à une même distance de l'axe de rotation de la roue (11) que chaque circuit de mesure (3, 3') pour être en regard de chaque circuit de mesure (3, 3') respectif à son passage lors de la rotation de la roue (11), et un dispositif portable (4) agencé pour communiquer sans fil des signaux radiofréquences avec chaque circuit de mesure (3, 3'),
chaque circuit de mesure (3, 3') comprenant :
- un capteur magnétique (31) destiné à détecter son passage en rotation devant l'aimant permanent (2, 2') respectif et à générer une impulsion de tension induite à chaque passage devant l'aimant permanent (2, 2') respectif,
- un redresseur (32) agencé pour redresser la tension générée par le capteur magnétique (31) et un condensateur de lissage (C_{L}) agencé pour stocker la tension redressée pour l'alimentation de chaque circuit de mesure (3, 3'),
- une unité de calcul (34), qui est cadencée par un oscillateur (33) à quartz horloger, étant agencée pour calculer une vitesse et/ou une distance parcourue du vélo (10) sur la base des impulsions de tension induite reçues du capteur magnétique (31) en connaissant la valeur du diamètre de la roue (11) du vélo (10) ou pour déterminer des temps de passage du capteur magnétique (31) en regard de l'aimant permanent (2, 2') respectif sur la base des impulsions de tension induite fournies par le capteur magnétique (31), et
- une unité de transmission-réception (35) liée à une antenne (36) agencée pour transmettre une ou plusieurs mesures de vitesse et/ou distance calculées dans l'unité de calcul (34) du circuit de mesure (3, 3') au dispositif portable (4) porté par l'utilisateur ou sur une partie du vélo (10) ou pour transmettre des données relatives aux temps de passage du capteur magnétique (31) en regard de l'aimant permanent (2, 2') respectif au dispositif portable (4) de manière à calculer dans une unité de traitement (44) du dispositif portable (4) une vitesse et/ou une distance parcourue du vélo (10), et
chaque circuit de mesure (3, 3') comprenant une mémoire non volatile (37) agencée pour effectuer une mémorisation de mesures de vitesse et/ou de distance parcoure obtenues par intégration dans l'unité de calcul (34) du circuit de mesure (3) dans ladite mémoire non volatile (37) de chaque circuit de mesure (3, 3'), et
le dispositif portable (4) comprenant une unité de traitement (44) et une mémoire non volatile (47) agencée pour effectuer une mémorisation de mesures de vitesse et/ou de distance parcoure obtenues par intégration dans l'unité de traitement (44) du dispositif portable (4), dans ladite mémoire non volatile (47) du dispositif portable (4).

16. Système (1) de mesure selon la revendication 15, pour lequel chaque circuit de mesure (3, 3') est destiné à être placé sur un rayon (21) ou une jante ou un pneu d'une roue avant (11) du vélo (10), et chaque aimant permanent (2, 2') est destiné à être placé sur la fourche avant (12) du vélo, **caractérisé en ce que** le dispositif portable (4) est un téléphone portable ou une tablette électronique pour être porté par l'utilisateur ou fixé sur le guidon du vélo, et **en ce qu'**une ou des mesures effectuées dans chaque circuit de mesure (3, 3') sont transmises par des signaux radiofréquences de type BLE (S_{RF}) au dispositif portable pour être affichées sur un élément d'affichage (48) ou signalées par un signal audio d'un élément audio (48') à un utilisateur du vélo.

17. Système (1) de mesure selon la revendication 15, pour lequel les deux circuits de mesure (3, 3') à capteur magnétique (31) sont disposés chacun sur un rayon respectif de la roue (11) du vélo (10), ou sur la jante ou le pneu de la roue (11), les circuits de mesure (3, 3') étant disposés à 180° l'un de l'autre d'un même côté ou sur deux côtés différents de la roue (11).

18. Système (1) de mesure selon la revendication 15, **caractérisé en ce que** chaque circuit de mesure (3, 3') comprend un capteur de température pour mesurer la température du sol à transmettre au dispositif portable (4).

19. Système (1) de mesure selon la revendication 15, **caractérisé en ce que** chaque circuit de mesure (3) comprend un accéléromètre pour une mesure d'accélération angulaire à transmettre au dispositif portable (4).

## Patentansprüche

1. Verfahren zum Messen mindestens einer Geschwindigkeit und/oder einer Distanz, die von einem Fahrrad (10) bei seiner Benutzung durch einen Benutzer zurückgelegt wird, anhand mindestens zweier Messkreise (3, 3'), wobei jeder Messkreis einen Magnetsensor (31) umfasst, wobei die beiden Messkreise auf einer gleichen Seite des Rades oder der Felge oder auf zwei gegenüberliegenden Seiten des Rades (11) oder der Felge des Fahrrads angeordnet, und um 180° zueinander versetzt sind, und mindestens zwei Permanentmagneten (2, 2'), die an einem Rahmenabschnitt (13) oder einer Gabel (12) zur Montage des Drehfreilaufs angeordnet sind, wobei jeder Permanentmagnet (2, 2') an dem Rahmenabschnitt (13) oder der Gabel (12) in einem gleichen Abstand von der Drehachse des Rades (11) angeordnet ist wie jeder Messkreis (3, 3'), um dem jeweiligen Messkreis (3, 3') bei seinem Durchlauf bei der Drehung des Rades (11) gegenüber zu liegen,
wobei das Verfahren die Schritte umfasst zum:
- in Bewegung setzen des Fahrrads (10) auf einem Weg mit dem sich drehenden Rad (11) mit den Messkreisen (3, 3'),
- Erkennen des Durchlaufs des Magnetsensors (31) jedes Messkreises (3, 3') gegenüber dem jeweiligen Permanentmagneten (2, 2') durch Erzeugen eines induzierten Impulses einer Spannung bei jedem Durchlauf jedes Messkreises (3, 3') bei der Drehung,
- Gleichrichten der von dem Magnetsensor (31) erzeugten Spannung anhand eines Gleichrichters (32) und Speichern der gleichgerichteten Spannung auf einem Glättungskondensator (C_{L}), um den jeweiligen Messkreis (3, 3') mit Strom zu versorgen,
- Berechnen einer Geschwindigkeit und/oder einer zurückgelegten Distanz des Fahrrads (10) in einer Recheneinheit (34), die von einem Uhrenquarzoszillator (33) des Messkreises getaktet wird, auf der Grundlage der Impulse einer induzierten Spannung, die mit der Zeit von dem Magnetsensor (31) empfangen werden, wobei der Wert des Durchmessers des Rads (11) des Fahrrads (10) bekannt ist, und
- Durchführen einer Speicherung von Messwerten einer Geschwindigkeit und/oder zurückgelegten Distanz, die durch Integration in der Recheneinheit (34) jedes Messkreises (3, 3') erhalten werden, in einem nichtflüchtigen Speicher (37) jedes Messkreises (3, 3'), und
- drahtlos Übertragen einer oder mehrerer Messwerte der Geschwindigkeit und/oder der Distanz, die in der Recheneinheit (34) jedes Messkreises (3, 3') berechnet werden, an eine tragbare Vorrichtung (4), die vom Benutzer oder an einem Teil des Fahrrads (10) getragen wird, durch eine Signalübertragungs- und -empfangseinheit (35), die mit einer Antenne (36) eines jeden Messkreises (3, 3') verbunden ist.

2. Verfahren zum Messen mindestens einer Geschwindigkeit und/oder einer Distanz, die von einem Fahrrad (10) bei seiner Benutzung durch einen Benutzer zurückgelegt wird, anhand mindestens zweier Messkreise (3, 3'), wobei jeder Messkreis einen Magnetsensor (31) umfasst, die auf einer gleichen Seite des Rades oder der Felge oder auf zwei gegenüberliegenden Seiten des Rades (11) oder der Felge des Fahrrads angeordnet, und um 180° zueinander versetzt sind, und mindestens zwei Permanentmagneten (2, 2'), die an einem Rahmenabschnitt (13) oder einer Gabel (12) zur Montage des Drehfreilaufs angeordnet sind, wobei jeder Permanentmagnet (2, 2') an dem Rahmenabschnitt (13) oder der Gabel (12) in einem gleichen Abstand von der Drehachse des Rades (11) angeordnet ist wie jeder Messkreis (3, 3'), um dem jeweiligen Messkreis (3, 3') bei seinem Durchlauf bei der Drehung des Rades (11) gegenüber zu liegen,
wobei das Verfahren die Schritte umfasst zum
- in Bewegung setzen des Fahrrads (10) auf einem Weg mit dem sich drehenden Rad (11) mit den Messkreisen (3, 3'),
- Erkennen des Durchlaufs des Magnetsensors (31) jedes Messkreises (3, 3') gegenüber dem jeweiligen Permanentmagneten (2, 2') durch Erzeugen eines Impulses einer induzierten Spannung bei jedem Durchlauf jedes Messkreises (3, 3') bei der Drehung,
- Gleichrichten der von dem Magnetsensor (31) erzeugten Spannung anhand eines Gleichrichters (32) und Speichern der gleichgerichteten Spannung auf einem Glättungskondensator (C_{L}), um den jeweiligen Messkreis (3, 3') mit Strom zu versorgen,
- Bestimmen der Durchlaufzeiten jedes Messkreises (3, 3') mit Magnetsensor (31) gegenüber dem jeweiligen Permanentmagneten (2, 2') in einer Recheneinheit (34), die von einem Uhrenquarzoszillator (33) des Messkreises (3, 3') getaktet wird, auf der Grundlage von Impulsen einer induzierten Spannung, die von dem Magnetsensor (31) bereitgestellt werden, und
- drahtlos Übertragen der Daten bezüglich der Durchlaufzeiten jedes Magnetsensors (31) gegenüber dem jeweiligen Permanentmagneten (2, 2') an eine tragbare Vorrichtung (4), die vom Benutzer oder an einem Teil des Fahrrads (10) getragen wird, durch eine Signalübertragungs- und - empfangseinheit (35) die mit einer Antenne (36) jedes Messkreises (3, 3') verbunden ist, um in einer Verarbeitungseinheit (44) der tragbaren Vorrichtung (4) eine Geschwindigkeit und/oder eine zurückgelegte Distanz des Fahrrads (10) zu berechnen, und
- Durchführen einer Speicherung von Messwerten einer Geschwindigkeit und/oder zurückgelegten Distanz, die durch Integration in der Verarbeitungseinheit (44) der tragbaren Vorrichtung (4) erhalten werden, in einem nichtflüchtigen Speicher (47) der tragbaren Vorrichtung (4).

3. Messverfahren nach einem der Ansprüche 1 und 2, **dadurch gekennzeichnet, dass** eine von dem Fahrrad (10) über einen bestimmten Zeitraum zurückgelegte Distanz durch Integration in der Recheneinheit (34) des Messkreises (3) oder in der Verarbeitungseinheit (44) der tragbaren Vorrichtung (4) auf der Grundlage von der mit der Zeit vom Magnetsensor (31) empfangenen Impulse einer induzierten Spannung berechnet wird, und dadurch, dass die tragbare Vorrichtung (4) angeordnet ist, um einen momentane Geschwindigkeitsmesswert oder Messwerte der Geschwindigkeit und/oder der zurückgelegten Distanz auf einem Anzeigeelement (48) der tragbaren Vorrichtung (4) anzuzeigen, oder diese Messungen dem Benutzer durch ein Audiosignal über ein Audioelement (48') der tragbaren Vorrichtung (4) zu signalisieren.

4. Messverfahren nach Anspruch 3, **dadurch gekennzeichnet, dass** ein oder mehrere Messwerte der zurückgelegten Distanz gleichzeitig mit der oder den Messwerten einer Geschwindigkeit oder unabhängig davon drahtlos an die tragbare Vorrichtung (4) übertragen werden.

5. Messverfahren nach Anspruch 1, **dadurch gekennzeichnet, dass**, sobald ein Geschwindigkeitsmesswert in der Recheneinheit (34) bestimmt wird, eine direkte Übertragung dieses Messwerts an die tragbare Vorrichtung (4) erfolgt, um diesen momentanen Geschwindigkeitsmesswert auf einem Anzeigeelement (48) der tragbaren Vorrichtung (4) anzuzeigen, oder um diesen Messwert dem Benutzer durch ein Audiosignal über ein Audioelement (48') der tragbaren Vorrichtung (4) zu signalisieren.

6. Messverfahren nach Anspruch 1, **dadurch gekennzeichnet, dass** ein maximaler Geschwindigkeitswert oder ein durchschnittlicher Geschwindigkeitswert über einen bestimmten Zeitraum in der Recheneinheit (34) bestimmt, und an die tragbare Vorrichtung (4) übertragen wird, um diesen maximalen oder durchschnittlichen Geschwindigkeitswert auf einem Anzeigeelement (48) der tragbaren Vorrichtung (4) anzuzeigen, oder um dem Benutzer diesen Messwert durch ein Audiosignal über ein Audioelement (48') der tragbaren Vorrichtung (4) zu signalisieren.

7. Messverfahren nach Anspruch 2, **dadurch gekennzeichnet, dass** ein maximaler Geschwindigkeitswert oder ein durchschnittlicher Geschwindigkeitswert über eine bestimmte Zeitdauer in der Verarbeitungseinheit (44) der tragbaren Vorrichtung (4) bestimmt wird, um diesen maximalen oder durchschnittlichen Geschwindigkeitswert auf einem Anzeigeelement (48) der tragbaren Vorrichtung (4) anzuzeigen oder um dem Benutzer diesen Messwert durch ein Audiosignal über ein Audioelement (48') der tragbaren Vorrichtung (4) zu signalisieren.

8. Messverfahren nach Anspruch 1, **dadurch gekennzeichnet, dass**, sobald der Versorgungsspannungspegel am Glättungskondensator (C_{L}) unter eine erste untere Versorgungsspannungsschwelle fällt, eine Deaktivierung der Signalübertragungs- und -empfangseinheit (35) durchgeführt wird.

9. Messverfahren nach Anspruch 8, **dadurch gekennzeichnet, dass**, bevor der Versorgungsspannungspegel am Glättungskondensator (C_{L}) unter eine zweite Versorgungsspannungsschwelle fällt, die niedriger ist als die erste untere Schwelle, eine Speicherung verschiedener Berechnungen der Geschwindigkeit und/oder der zurückgelegten Distanz des Fahrrads (10) in einem nichtflüchtigen Speicher (37) des Messkreises (3) erfolgt.

10. Messverfahren nach einem der Ansprüche 1 und 2, **dadurch gekennzeichnet, dass** eine Messung der Temperatur des Bodens durch einen Temperatursensor eines jeden Messkreises (3, 3') durchgeführt wird, und dadurch, dass eine Übertragung des Temperaturmesswerts an die tragbare Vorrichtung (4) durchgeführt wird.

11. Messverfahren nach einem der Ansprüche 1 und 2, **dadurch gekennzeichnet, dass** eine Winkelbeschleunigungsmessung durch einen Beschleunigungsmesser eines jeden Messkreises (3, 3') durchgeführt wird, und dadurch, dass eine Übertragung des Winkelbeschleunigungsmesswerts an die tragbare Vorrichtung (4) durchgeführt wird.

12. Messverfahren nach Anspruch 1, **dadurch gekennzeichnet, dass** ein Kalibrierungsvorgang des Raddurchmessers (11) des Fahrrads (10) und des Befestigungswinkels des Messkreises (3) anfangs durch eine Übertragung von Parametersignalen (S_{RF}) von der tragbaren Vorrichtung (4) zu jedem Messkreis (3, 3') durchgeführt wird.

13. Messverfahren nach Anspruch 2, **dadurch gekennzeichnet, dass** ein Kalibrierungsvorgang des Durchmessers des Rades (11) des Fahrrads (10) und des Befestigungswinkels eines jeden Messkreises (3, 3') durch die tragbare Vorrichtung (4) auf der Grundlage von Rohdaten, die von jedem Messkreis (3, 3') übertragen werden, und von Werten, die absolut oder auf einer kalibrierten Strecke gemessen werden, durchgeführt wird.

14. Messverfahren nach einem der Ansprüche 1 und 2, **dadurch gekennzeichnet, dass** jeder Messkreis (3, 3') über Funkfrequenzsignale (S_{RF}) der Sende-/Empfangseinheit (35) vom Typ BLE im Werbemodus mit der tragbaren Vorrichtung (4) kommuniziert.

15. System (1) zum Messen einer Geschwindigkeit und/oder einer Distanz, die von einem Fahrrad (10) zurückgelegt wird, das sich zum Umsetzen des Messverfahrens nach einem der vorstehenden Ansprüche eignet, wobei das Messsystem umfasst:
- ein Fahrrad,
- eine tragbare Vorrichtung (4),
- mindestens zwei Messkreise (3, 3'), wobei jeder Messkreis einen Magnetsensor (31) umfasst, wobei die beiden Messkreise auf einer gleichen Seite des Rads oder der Felge oder auf zwei gegenüberliegenden Seiten des Rads (11) oder der Felge des Fahrrads angeordnet sind und um 180° zueinander versetzt sind,
- mindestens zwei Permanentmagneten (2, 2'), die auf einem Rahmenabschnitt (13) oder einer Gabel (12) zur Montage des Drehfreilaufs des Fahrrads angeordnet sind, wobei jeder Permanentmagnet (2, 2') auf dem Rahmenabschnitt (13) oder der Gabel (12) in einem gleichen Abstand von der Drehachse des Rads (11) angeordnet ist, wie jeder Messkreis (3, 3'), um jeder jeweiligen Messschaltung (3, 3') bei ihrem Durchlauf bei der Drehung des Rades (11) gegenüber zu stehen, und eine tragbare Vorrichtung (4), die angeordnet ist, um drahtlos Funkfrequenzsignale mit jedem Messkreis (3, 3') zu kommunizieren,
wobei jeder Messkreis (3, 3') umfasst:
- einen Magnetsensor (31), der dazu bestimmt ist, seinen Drehdurchlauf vor dem jeweiligen Permanentmagneten (2, 2') zu erkennen, und bei jedem Durchlauf vor dem jeweiligen Permanentmagneten (2, 2') einen Impuls induzierter Spannung zu erzeugen,
- einen Gleichrichter (32), der angeordnet ist, um die von dem Magnetsensor (31) erzeugte Spannung gleichzurichten, und einen Glättungskondensator (C_{L}), der angeordnet ist, um die gleichgerichtete Spannung zur Versorgung jedes Messkreises (3, 3') zu speichern,
- eine Recheneinheit (34), die von einem Uhrenquarzoszillator (33) getaktet wird und angeordnet ist, um eine Geschwindigkeit und/oder eine zurückgelegte Distanz des Fahrrads (10) auf der Grundlage der von dem Magnetsensor (31) empfangenen Impulse induzierter Spannung zu berechnen, wobei sie den Wert des Durchmessers des Rads (11) des Fahrrads (10) kennt, oder um Durchlaufzeiten des Magnetsensors (31) gegenüber dem jeweiligen Permanentmagneten (2, 2') auf der Grundlage der von dem Magnetsensor (31) bereitgestellten Impulse induzierter Spannung zu bestimmen, und
- eine Sende-Empfangseinheit (35), die mit einer Antenne (36) verbunden ist, die angeordnet ist, um einen oder mehrere Messwerte einer Geschwindigkeit- und/oder Distanz, die in der Recheneinheit (34) des Messkreises (3, 3') berechnet werden, an die tragbare Vorrichtung (4) zu übertragen, die vom Benutzer oder an einem Teil des Fahrrads (10) getragen wird, oder um Daten bezüglich der Durchlaufzeiten des Magnetsensors (31) gegenüber dem jeweiligen Permanentmagneten (2, 2') an die tragbare Vorrichtung (4) zu übertragen, um in einer Verarbeitungseinheit (44) der tragbaren Vorrichtung (4) eine Geschwindigkeit und/oder eine zurückgelegte Distanz des Fahrrads (10) zu berechnen, und
jeder Messkreis (3, 3') einen nichtflüchtigen Speicher (37) umfasst, der angeordnet ist, um eine Speicherung von Messwerten einer Geschwindigkeit und/oder zurückgelegten Distanz durchzuführen, die durch Integration in der Recheneinheit (34) des Messkreises (3) in dem nichtflüchtigen Speicher (37) jedes Messkreises (3, 3') erhalten werden, und
die tragbare Vorrichtung (4) eine Verarbeitungseinheit (44) und einen nichtflüchtigen Speicher (47) umfasst, der angeordnet ist, um eine Speicherung von Messwerten einer Geschwindigkeits- und/oder der zurückgelegten Distanz durchzuführen, die durch Integration in der Verarbeitungseinheit (44) der tragbaren Vorrichtung (4) in dem nichtflüchtigen Speicher (47) der tragbaren Vorrichtung (4) erhalten werden.

16. System (1) zum Messen nach Anspruch 15, wobei jeder Messkreis (3, 3') dazu bestimmt ist, an einer Speiche (21) oder einer Felge oder einem Reifen eines Vorderrads (11) des Fahrrads (10) platziert zu werden, und jeder Permanentmagnet (2, 2') dazu bestimmt ist, an der Vordergabel (12) des Fahrrads platziert zu werden, **dadurch gekennzeichnet, dass** die tragbare Vorrichtung (4) ein Mobiltelefon oder ein Tablet-Computer ist, um vom Benutzer getragen oder am Lenker des Fahrrads befestigt zu werden, und dadurch, dass eine oder mehrere Messungen, die in jedem Messkreis (3, 3') durchgeführt werden, durch BLE-Funkfrequenzsignale (S_{RF}) an die tragbare Vorrichtung übertragen werden, um auf einem Anzeigeelement (48) angezeigt, oder durch ein Audiosignal von einem Audioelement (48') einem Benutzer des Fahrrads signalisiert zu werden.

17. System (1) zum Messen nach Anspruch 15, wobei die beiden Messkreise (3, 3') mit Magnetsensor (31) jeweils an einer jeweiligen Speiche des Rads (11) des Fahrrads (10) oder an der Felge oder dem Reifen des Rads (11) angeordnet werden, wobei die Messkreise (3, 3') in einem Winkel von 180° zueinander auf einer gleichen Seite oder auf zwei verschiedenen Seiten des Rads (11) angeordnet sind.

18. System (1) zum Messen nach Anspruch 15, **dadurch gekennzeichnet, dass** jeder Messkreis (3, 3') einen Temperatursensor zum Messen der Temperatur des Bodens umfasst, die an die tragbare Vorrichtung (4) zu übertragen ist.

19. System (1) zum Messen nach Anspruch 15, **dadurch gekennzeichnet, dass** jeder Messkreis (3) einen Beschleunigungsmesser für eine Winkelbeschleunigungsmessung zur Übertragung an die tragbare Vorrichtung (4) umfasst.

## Claims

1. Method for measuring at least one speed and/or distance travelled by a bicycle (10) when in use by a user, which measurement is carried out by means of at least two measuring circuits (3, 3'), each measuring circuit comprising a magnetic sensor (31), the two measuring circuits being arranged on the same side of the wheel or rim or on two opposite sides of the wheel (11) or rim of the bicycle and offset by 180° from each other, and at least two permanent magnets (2, 2') arranged on a frame portion (13) or a fork (12) for mounting the freely rotating wheel, each permanent magnet (2, 2') being arranged on the frame portion (13) or the fork (12) at the same distance from the axis of rotation of the wheel (11) as each measuring circuit (3, 3') in order to face the respective measuring circuit (3, 3') as it passes during rotation of the wheel (11),
the method comprising the steps of:
- setting the bicycle (10) in motion on a path with the wheel (11) rotating with the measuring circuits (3, 3'),
- detecting the passage of the magnetic sensor (31) of each measuring circuit (3, 3') opposite the respective permanent magnet (2, 2') by generating an induced voltage pulse each time each rotating measuring circuit (3, 3') passes,
- rectifying the voltage generated by the magnetic sensor (31) by means of a rectifier (32) and storing the rectified voltage on a smoothing capacitor (C_{L}) to supply the respective measuring circuit (3, 3'),
- computing a speed and/or distance travelled by the bicycle (10) in a computing unit (34), which is clocked by a quartz horological oscillator (33) of the measuring circuit, on the basis of the induced voltage pulses received over time from the magnetic sensor (31) and given the known value of the diameter of the wheel (11) of the bicycle (10), and
- storing speed and/or distance travelled measurements obtained by integration, in the computing unit (34) of each measuring circuit (3, 3') in a non-volatile memory (37) of each measuring circuit (3, 3'), and
- wirelessly transmitting one or more speed and/or distance measurements computed in the computing unit (34) of each measuring circuit (3, 3') to a portable device (4) carried by the user or on part of the bicycle (10) by a signal transmission-reception unit (35) linked to an antenna (36) of each measuring circuit (3, 3').

2. Method for measuring at least one speed and/or distance travelled by a bicycle (10) during its use by a user, by means of at least two measuring circuits (3, 3'), each measuring circuit comprising a magnetic sensor (31) disposed on the same side of the wheel or rim or on two opposite sides of the wheel (11) or rim of the bicycle, and being offset from one another by 180°, and of at least two permanent magnets (2, 2') arranged on a frame portion (13) or a fork (12) for mounting the freely rotating wheel, each permanent magnet (2, 2') being arranged on the frame portion (13) or the fork (12) at the same distance from the axis of rotation of the wheel (11) as each measuring circuit (3, 3') in order to face the respective measuring circuit (3, 3') as it passes during rotation of the wheel (11),
the method comprising the steps of:
- setting the bicycle (10) in motion on a path with the wheel (11) rotating with the measuring circuits (3, 3'),
- detecting the passage of the magnetic sensor (31) of each measuring circuit (3, 3') opposite the respective permanent magnet (2, 2') by generating an induced voltage pulse each time each rotating measuring circuit (3, 3') passes,
- rectifying the voltage generated by the magnetic sensor (31) by means of a rectifier (32) and storing the rectified voltage on a smoothing capacitor (C_{L}) to supply the respective measuring circuit (3, 3'),
- determining times at which each measuring circuit (3, 3') with a magnetic sensor (31) passed opposite the respective permanent magnet (2, 2') in a computing unit (34), which is clocked by a quartz horological oscillator (33) of the measuring circuit (3, 3'), on the basis of induced voltage pulses supplied by the magnetic sensor (31), and
- wirelessly transmitting data relating to the times at which each magnetic sensor (31) passed opposite the respective permanent magnet (2, 2') to a portable device (4) carried by the user or on part of the bicycle (10) by a signal transmission-reception unit (35) linked to an antenna (36) of each measuring circuit (3, 3') so as to compute, in a processing unit (44) of the portable device (4), a speed and/or distance travelled by the bicycle (10), and
- storing speed and/or distance travelled measurements obtained by integration, in the computing unit (44) of the portable device (4) in a non-volatile memory (47) of the portable device (4).

3. Measurement method according to one of claims 1 and 2, **characterised in that** a distance travelled by the bicycle (10) over a given period of time is computed by integration, in the computing unit (34) of the measuring circuit (3) or in the processing unit (44) of the portable device (4), on the basis of induced voltage pulses received over time from the magnetic sensor (31), and **in that** the portable device (4) is arranged to display an instantaneous speed measurement or measurements of speed and/or distance travelled on a display element (48) of the portable device (4), or to notify the user of these measurements by an audio signal via an audio element (48') of the portable device (4).

4. Measurement method according to claim 3, **characterised in that** one or more distance travelled measurements are transmitted wirelessly to the portable device (4) at the same time as or independently of the one or more speed measurements.

5. Measurement method according to claim 1, **characterised in that** as soon as a speed measurement is determined in the computing unit (34), this measurements is directly transmitted to the portable device (4) in order to display this instantaneous speed measurement on a display element (48) of the portable device (4), or in order to notify the user of this measurement by means of an audio signal via an audio element (48') of the portable device (4).

6. Measurement method according to claim 1, **characterised in that** a maximum speed value or an average speed value is determined in the computing unit (34) over a given period of time and transmitted to the portable device (4) in order to display this maximum or average speed value on a display element (48) of the portable device (4), or in order to notify the user of this measurement by means of an audio signal via an audio element (48') of the portable device (4).

7. Measurement method according to claim 2, **characterised in that** a maximum speed value or an average speed value is determined in the processing unit (44) of the portable device (4) over a given period of time in order to display this maximum or average speed value on a display element (48) of the portable device (4), or in order to notify the user of this measurement by an audio signal via an audio element (48') of the portable device (4).

8. Measurement method according to claim 1, **characterised in that** as soon as the supply voltage level on the smoothing capacitor (C_{L}) falls below a first low supply voltage threshold, the signal transmission-reception unit (35) is deactivated.

9. Measurement method according to claim 8, **characterised in that** before the supply voltage level on the smoothing capacitor (C_{L}) falls below a second supply voltage threshold lower than the first low threshold, various computations of the speed and/or distance travelled by the bicycle (10) are stored in a non-volatile memory (37) of the measuring circuit (3).

10. Measurement method according to one of claims 1 and 2, **characterised in that** the temperature of the ground is measured by a temperature sensor of each measuring circuit (3, 3'), and **in that** the temperature measurement is transmitted to the portable device (4).

11. Measurement method according to one of claims 1 and 2, **characterised in that** angular acceleration is measured by an accelerometer of each measuring circuit (3, 3'), and **in that** the angular acceleration measurement is transmitted to the portable device (4).

12. Measurement method according to claim 1, **characterised in that** an operation for calibrating the diameter of the wheel (11) of the bicycle (10) and the angle of attachment of the measuring circuit (3) is carried out initially by transmitting parameterisation signals (S_{RF}) from the portable device (4) to each measuring circuit (3, 3').

13. Measurement method according to claim 2, **characterised in that** an operation for calibrating the diameter of the wheel (11) of the bicycle (10) and the angle of attachment of each measuring circuit (3, 3') is carried out by the portable device (4) on the basis of raw data transmitted by each measuring circuit (3, 3') and values measured in absolute terms or over a calibrated distance.

14. Measurement method according to one of claims 1 and 2, **characterised in that** each measuring circuit (3, 3') communicates with the portable device (4) by means of radio frequency signals (S_{RF}) of the BLE type from the transmission-reception unit (35) in marketing mode.

15. System (1) for measuring a speed and/or distance travelled by a bicycle (10) and suitable for implementing the measurement method according to any of the preceding claims, the measuring system comprising:
- a bicycle,
- a portable device (4),
- at least two measuring circuits (3, 3'), each measuring circuit comprising a magnetic sensor (31), the two measuring circuits being arranged on the same side of the wheel or rim or on two opposite sides of the wheel (11) or rim of the bicycle, and being offset by 180° from each other,
- at least two permanent magnets (2, 2') arranged on a frame portion (13) or a fork (12) for mounting the freely rotating wheel of the bicycle, each permanent magnet (2, 2') being arranged on the frame portion (13) or the fork (12) at the same distance from the axis of rotation of the wheel (11) as each measuring circuit (3, 3') in order to face each respective measuring circuit (3, 3') as it passes during rotation of the wheel (11), and a portable device (4) arranged to wirelessly communicate radio frequency signals with each measuring circuit (3, 3'),
each measuring circuit (3, 3') comprising:
- a magnetic sensor (31) intended to detect the passage of the rotating magnetic sensor in front of the respective permanent magnet (2, 2') and to generate an induced voltage pulse each time it passes in front of the respective permanent magnet (2, 2'),
- a rectifier (32) intended to rectify the voltage generated by the magnetic sensor (31) and a smoothing capacitor (C_{L}) intended to store the rectified voltage for supplying each measuring circuit (3, 3'),
- a computing unit (34), which is clocked by a quartz horological oscillator (33), being arranged to compute a speed and/or distance travelled by the bicycle (10) on the basis of the induced voltage pulses received from the magnetic sensor (31) and given the known value of the diameter of the wheel (11) of the bicycle (10) or to determine times at which the magnetic sensor (31) passed opposite the respective permanent magnet (2, 2') on the basis of the induced voltage pulses supplied by the magnetic sensor (31), and
- a transmission-reception unit (35) connected to an antenna (36) arranged to transmit one or more speed and/or distance measurements computed in the computing unit (34) of the measuring circuit (3, 3') to the portable device (4) carried by the user or on part of the bicycle (10) or to transmit data relating to the times at which the magnetic sensor (31) passed opposite the respective permanent magnet (2, 2') to the portable device (4) so as to compute, in a processing unit (44) of the portable device (4), a speed and/or distance travelled by the bicycle (10), and
each measuring circuit (3, 3') comprising a non-volatile memory (37) arranged to store speed and/or distance travelled measurements obtained by integration, in the computing unit (34) of the measuring circuit (3) in said non-volatile memory (37) of each measuring circuit (3, 3'), and
the portable device (4) comprising a processing unit (44) and a non-volatile memory (47) arranged to store speed and/or distance travelled measurements obtained by integration, in the computing unit (44) of the portable device (4) in said non-volatile memory (47) of the portable device (4).

16. Measurement system (1) according to claim 15, wherein each measuring circuit (3, 3') is intended to be placed on a spoke (21) or a rim or a tyre of a front wheel (11) of the bicycle (10), and each permanent magnet (2, 2') is intended to be placed on the front fork (12) of the bicycle, **characterised in that** the portable device (4) is a mobile telephone or an electronic tablet to be carried by the user or fastened to the handlebars of the bicycle, and **in that** one or more measurements made in each measuring circuit (3, 3') are transmitted by BLE-type radio frequency signals (S_{RF}) to the portable device in order to be displayed on a display element (48) or notified to a user of the bicycle by an audio signal from an audio element (48').

17. Measurement system (1) according to claim 15, wherein the two measuring circuits (3, 3') with a magnetic sensor (31) are each arranged on a respective spoke of the wheel (11) of the bicycle (10), or on the rim or tyre of the wheel (11), the measuring circuits (3, 3') being arranged at 180° to one another on the same side or on two different sides of the wheel (11).

18. Measurement system (1) according to claim 15, **characterised in that** each measuring circuit (3, 3') comprises a temperature sensor for measuring the temperature of the ground which is to be transmitted to the portable device (4).

19. Measurement system (1) according to claim 15, **characterised in that** each measuring circuit (3) comprises an accelerometer for measuring an angular acceleration which is to be transmitted to the portable device (4).
